# EUROPEAN PATENT SPECIFICATION

(11) **EP 3 438 055 B1**
(45) Date of publication and mention of the grant of the patent: **11.05.2022**
(21) Application number: 17774964.5
(22) Date of filing: 27.03.2017
(51) Int. Cl.: C01G 49/00, C08K 3/22, C08L 101/00, H01F 1/113, C04B 35/26, H01F 1/34

(54) **FERRITE POWDER, RESIN COMPOSITION, AND MOLDED ARTICLE**
FERRITPULVER, HARZZUSAMMENSETZUNG UND FORMKÖRPER
POUDRE DE FERRITE, COMPOSITION DE RÉSINE, ET CORPS MOULÉ

(30) Priority: 31.03.2016 JP 2016071500
(43) Date of publication of application: 06.02.2019
(73) Proprietor: Powdertech Co., Ltd., Kashiwa-shi, Chiba 277-8557 (JP)
(72) Inventor: AGA, Koji, Kashiwa-shi Chiba 277-8557 (JP); IGARASHI, Tetsuya, Kashiwa-shi Chiba 277-8557 (JP)
(74) Representative: Dr. Solf & Zapf Patent- und Rechtsanwalts PartG mbB
(86) International application number: PCT/JP2017/012438
(87) International publication number: WO 2017/170427

(56) References cited:
- EP-A1- 2 136 379
- EP-A1- 2 860 166
- WO-A1-2014/058067
- WO-A1-2016/117648
- JP-A- H0 820 066
- JP-A- S55 145 303
- JP-A- 2002 260 913
- JP-A- 2018 120 921
- US-A1- 2007 023 970
- G. R. GORDANI et al.: "Enhanced magnetic properties of substituted Sr-hexaferrite nanoparticles synthesized by co-precipitation method", Ceramics International, vol. 40, no. 3, April 2014 (2014-04), pages 4945-4952, XP055467345, ISSN: 0272-8842

## Description

### TECHNICAL FIELD

The present invention relates to ferrite powder, a resin composition and a molded body.

### RELATED ART

For example, at a field of manufacturing a food, there is a problem of contamination of foreign matters. When the problem of the contamination of foreign matters occurs, it becomes a big social problem, thereby giving a great deal of uneasiness to consumers as well as a great damage to food manufacturers, processors and the like.

In order to prevent the contamination of foreign materials, a metal detector is introduced, and opportunities to conduct a test on products before shipment are increasing.

However, since the metal detector cannot detect ordinary plastic materials and the like, it is impossible to detect foreign matters derived from a tool such as a packaging material used at the time of manufacturing even if the foreign matters are mixed.

For the purpose of solving such a problem, a working glove including a metal detection material constituted of a metal such as iron has been proposed (see Patent Document 1).

However, in such a technology, even when it is mixed as the foreign matters, there is a case in which it is not detected by the metal detector. In addition, there is a case in which the metal may not be detected with the metal detector by a change over time due to a chemical reaction such as an oxidation reaction.

### PRIOR ART DOCUMENTS

### PATENT DOCUMENTS

Patent document 1: JP 2009-120974 A WO 2014/058067 discloses a Sr ferrite powder that contains 10 to 13 mass% in terms of SrO. The content of Na in the Sr ferrite is 0.01 to 0.2 mass% in terms of Na₂O.

### SUMMARY OF THE INVENTION

### PROBLEMS TO BE SOLVED BY THE INVENTION

An object of the present invention is to provide a molded body which is capable of stably detecting with a metal detector and to provide ferrite powder and a resin composition which are capable of suitably using for producing the molded body.

### MEANS FOR SOLVING THE PROBLEMS

According to the present invention, such an object is achieved by a ferrite powder, detectable with a metal detector, comprising hard ferrite particles containing Sr of 7.8 mass% or more and 9.0 mass% or less and Fe of 61.0 mass% or more and 65.0 mass% or less, wherein an amount of Na to be measured by ion chromatography is 1 ppm or more and 200 ppm or less.

Preferably, a volume average particle diameter of the particles constituting the ferrite powder is 0.1 pm or more and 100 pm or less.

Preferably, residual magnetization by a VSM measurement when a magnetic field of 10 K · 1000/4ΠA/m is applied is 25 A · m²/kg or more and 40 A · m²/kg or less.

Preferably, coercive force by a VSM measurement when a magnetic field of 10 K · 1000/4ΠA/m is applied is 39.7 kA/m or more and 320 kA/m or less.

Preferably, an amount of Cl to be measured by the ion chromatography is 1 ppm or more and 100 ppm or less .

Preferably, an amount of S to be measured by the ion chromatography is 1 ppm or more and 1000 ppm or less .

According to the present invention, the object is further achieved by a resin composition comprising the ferrite powder of the present invention and a resin material.

Preferably, the ferrite powder is dispersedly present in the resin material.

Preferably, a content rate of the ferrite powder in the resin composition is 5.0 mass% or more and 90 mass% or less.

Preferably, the resin material includes one kind or more kinds selected from the group consisting of polyethylene, polypropylene, polyvinyl chloride, polyvinylidene chloride, polyvinyl alcohol (PVA), a fluorine based resin, silicone rubber, butadiene rubber, a thermoplastic elastomer, an epoxy resin and a silicone resin.

According to the present invention, the object is further achieved by a molded body having a portion formed by using the resin composition of the present invention.

Preferably, a content rate of the ferrite powder is 2.0 mass% or more and 20 mass% or less.

Preferably, the molded body is used in a field for manufacturing, processing and packaging of a food.

Preferably, the molded body is used for a part or all of a cooking utensil, a food preparation tool or a food packaging member.

Preferably, the molded body contains the ferrite powder in a region within 1.0 mm in a thickness direction from a surface thereof.

### EFFECT OF THE INVENTION

According to the present invention, it is possible to provide a molded body which is capable of stably detecting with a metal detector and to provide ferrite powder and a resin composition which are capable of suitably using for producing the molded body.

### DETAILED DESCRIPTION OF THE PREFERRED EMBODIMENTS

Hereinbelow, description will be made on preferred embodiments according to the present invention in detail.

### «Ferrite Powder»

First, description will be made on ferrite powder according to the present invention.

The ferrite powder of the present invention is characterized by containing a plurality of hard ferrite particles containing Sr of 7.8 mass% or more and 9.0 mass% or less and Fe of 61.0 mass% or more and 65.0 mass% or less.

This makes it possible for the metal detector to detect the ferrite powder or the molded body containing the ferrite powder with ease. Therefore, for example, when the ferrite powder of the present invention or at least a part of the molded body containing the ferrite powder is erroneously mixed in products such as a food product or the like, they can be reliably detected by the metal detector, so that it is possible to effectively prevent such products from distributing outside.

Further, the ferrite powder as described above is constituted of an oxide as a main component, is chemically stable, and has excellent corrosion resistance and excellent chemical resistance. Therefore, it is excellent in stability of the detection by the metal detector. In particular, when a metal detection material constituted of a metal material is applied, there is a possibility that it becomes difficult to detect with the metal detector by a change over time due to an oxidation reaction and the like. However, in the ferrite powder as described above, even when it is exposed to various kinds of environments, it is excellent in stability of the detection by the metal detector. In addition, the ferrite powder as described above has also excellent safety to the human body.

Further, in the hard ferrite powder of the present invention, an amount of Na (sodium) to be measured by ion chromatography is 1 ppm or more and 200 ppm or less.

If the amount of Na falls within the above range, it is possible to use even a molded body to which metal powder other than the ferrite powder is added in a stable state for a long period of time.

In this regard, measurement of the amount of Na in the hard ferrite powder can be carried out, for example, as follows.

First, 10 ml of ultrapure water (for example, Direct-Q UV3 manufactured by Merck KGaA) is added to 1 g of the ferrite powder. Ultrasonic wave is irradiated for 30 minutes to extract ion components.

Next, a supernatant of the obtained extract is filtered through a disposable disk filter for a pretreatment (for example, W-25-5 manufactured by TOSOH CORPORATION, a pore diameter 0.45 µm, etc.) to obtain a measurement sample.

Next, a quantitative analysis of cation components contained in the measurement sample is carried out by the ion chromatography, whereby the amount of Na (sodium ion amount) can be determined.

The conditions of the ion chromatography can be set, for example, as follows.

- Analyzer: IC-2010 manufactured by TOSOH CORPORATION
- Column: TSKgel SuperIC-Cation HSII (4.6 mm I.D. × 1 cm + 4.6 mm I.D. × 10 cm)
- Eluent: Methanesulfonic acid (3.0 mmol/L) + 18-crown 6-ether (2.7 mmol/L)
- Flow rate: 1.0 mL/min
- Column temperature: 40°C
- Injection volume: 30 µL
- Measurement mode: Non-suppressor mode
- Detector: CM detector
- Standard sample: Cation mixture standard solution manufactured by Kanto Chemical Co., Ltd

On the other hand, in the case where the ferrite powder does not satisfy the above-mentioned conditions, the excellent effect as described above cannot be obtained.

For example, if a content rate of Sr in the hard ferrite particles is less than 7.8 mass%, an amount of Fe becomes excessive, so that a relatively large amount of Fe₂O₃ is contained in the particles and magnetization decreases. As a result, it becomes difficult to detect the ferrite powder or the molded body containing the ferrite powder by the metal detector.

Further, if the content rate of Sr in the hard ferrite particles exceeds 9.0 mass%, an amount of Sr becomes excessive, so that a relatively large amount of SrO is contained in the particles or a Sr-Fe oxide other than Sr ferrite is contained therein, and thus the magnetization decreases. As a result, it becomes difficult to detect the ferrite powder or the molded body containing the ferrite powder by the metal detector.

Further, if a content rate of Fe in the hard ferrite particles is less than 61.0 mass%, the amount of Sr becomes excessive, so that the relatively large amount of SrO is contained in the particles or the Sr-Fe oxide other than Sr ferrite is contained therein, and thus the magnetization decreases. As a result, it becomes difficult to detect the ferrite powder or the molded body containing the ferrite powder by the metal detector.

Further, if the content rate of Fe in the hard ferrite particles exceeds 65.0 mass%, the amount of Fe becomes excessive, so that the relatively large amount of Fe₂O₃ is contained in the particles and the magnetization decreases. As a result, it becomes difficult to detect the ferrite powder or the molded body containing the ferrite powder by the metal detector.

Also, in the case where other ferrite particles are used in place of the hard ferrite particles containing Sr and Fe as described above, the excellent effect as described above cannot be obtained.

In addition, in the case where soft ferrite particles are used in place of the hard ferrite particles as described above, for example, when the heating is performed by microwave with a microwave oven or the like, occur problems that the ferrite powder generates heat to melt a resin material.

Although it is preferable that the amount of Na is less, it is impossible to completely remove a Na component derived from impurities (particularly, impurities contained in a Sr raw material or impurities derived from a salt content contained in industrial water) contained in a raw material.

On the other hand, if the amount of Na exceeds the above upper limit value, when the ferrite powder is used as a filler, it may cause viscosity rise at the time of mixing with the resin material, or a SUS sphere sensitivity increases more than necessary by decrease of the resistance when the molded body is used in applications requiring insulation in a large amount of moisture, so that it tends to be erroneously detected when used by a foreign matter detection with the metal detector.

As described above, the content rate of Sr in the hard ferrite particles may be 7.8 mass% or more and 9.0 mass% or less, but preferably 7.9 mass% or more and 8.9 mass% or less, and more preferably 8.0 mass% or more and 8.8 mass% or less.

As a result, the effect as described above is more remarkably exhibited.

Further, the content rate of Fe in the hard ferrite particles may be 61.0 mass% or more and 65.0 mass% or less, but preferably 61.1 mass% or more and 64.9 mass% or less, and more preferably 61.2 mass% or more and 64.8 mass% or less.

As a result, the effect as described above is more remarkably exhibited.

A content of each metal element (Fe, Sr, etc.) constituting the ferrite particles can be measured as follows.

First, ferrite particles: 0.2 g are weighed, and the ferrite particles are mixed to a mixed solvent of pure water: 60 ml, 1 N hydrochloric acid: 20 ml and 1 N nitric acid: 20 ml to obtain a mixture. Thereafter, the mixture is heated to obtain a solution in which the ferrite particles are completely dissolved. Then, by measuring the solution using an ICP analyzer (for example, ICPS-1000 IV manufactured by Shimadzu Corporation), the content of the metal element can be obtained.

The hard ferrite constituting the hard ferrite particles may contain a component (element) other than Fe, Sr and O. Examples of such a component include Ti, Si, Cl, Ca, Al and the like.

However, a content rate of the component (element) other than Fe, Sr and 0 contained in the hard ferrite constituting the hard ferrite particles is preferably 1.0 mass% or less.

Further, as described above, in the hard ferrite powder of the present invention, the amount of Na (sodium) measured by the ion chromatography may be 1 ppm or more and 200 ppm or less, but preferably 1 ppm or more and 150 ppm or less, and more preferably 1 ppm or more and 110 ppm or less.

As a result, the effect as described above is more remarkably exhibited.

In addition, the hard ferrite particles may contain a component other than the hard ferrite.

However, a content rate of the component other than the hard ferrite contained in the hard ferrite particles is preferably 1.0 mass% or less.

A volume average particle diameter of the particles constituting the ferrite powder is not particularly limited, but is preferably 0.1 µm or more and 100 µm or less, and more preferably 0.2 pm or more and 80 µm or less.

This makes it possible to further improve dispersibility of the ferrite powder to the resin material, and it is possible to perform production of the resin composition containing the ferrite powder and the resin material more suitably. In addition, it is possible to further improve strength, surface property and reliability of the molded body produced by using the resin composition. Further, it is possible to more stably produce the molded body using the resin composition. Furthermore, it is possible to more suitably adjust a color tone of the molded body.

On the other hand, if the volume average particle diameter of the particles constituting the ferrite powder is less than the lower limit value noted above, depending on the amount of the ferrite powder used for producing the resin composition, it takes time to disperse the ferrite powder in the resin material or an aggregate is dispersed as it is at the time of producing the resin composition as described later. Therefore, it is not preferable. In addition, a coloring power of ferrite becomes strong by reducing a particle size, and it tends to be a dull color when adding a color other than black, gray or brown. Therefore, it is not preferable.

Further, if the volume average particle diameter of the particles constituting the ferrite powder exceeds the upper limit value noted above, depending on the amount of the ferrite powder used for producing the resin composition, although depending on a shape, size and the like of the molded body produced using the resin composition, there is a possibility that the strength and the surface property (finish) of the molded body when the molded body is formed decrease. Therefore, it is not preferable. Further, for example, when an injection molding method is adopted as a method of producing the molded body, there is a possibility that the resin composition clogs a path of injection. Therefore, it is not preferable.

Furthermore, the volume average particle diameter of the particles constituting the ferrite powder is selected depending on, for example, the shape, size and the like of the molded body produced using the ferrite powder. More specifically, in the case where the ferrite powder is used for producing the molded body in the form of a film or sheet, it is preferred that the volume average particle diameter of the particles constituting the ferrite powder is 10 µm or less.

Further, in the production of the molded body, in the case where it is colored using a filler other than the ferrite powder, it is preferred that the volume average particle diameter of the ferrite powder is 5 µm or more.

This makes it possible to minimize the influence of the tint of the ferrite powder at the time of coloring.

The volume average particle diameter can be obtained, for example, by the following measurement. That is, first, the ferrite powder: 10 g as a sample and water: 80 ml are placed in a 100 ml beaker and 2 to 3 drops of a dispersant (sodium hexamethaphosphate) are added thereto. Next, dispersion is performed using an ultrasonic homogenizer (for example, UH-150 type manufactured by SMT Co. LTD.). In the case where the UH-150 type manufactured by SMT Co. LTD. is used as the ultrasonic homogenizer, for example, an output level 4 is set and the dispersion may be performed for 20 seconds. Thereafter, foam formed on a surface of the beaker is removed, and then it is introduced into a Microtrac particle size analyzer (for example, Model 9320-X100 manufactured by Nikkiso Co., Ltd.) to measure.

Also, the shape of the hard ferrite particles is not particularly limited, but is preferably spherical. More specifically, the ferrite powder preferably contains 80% or more of hard ferrite particles having a sphericity of 1 or more and 1.2 or less.

Thus, when mixing the resin material and the ferrite powder to prepare the resin composition, obtained are the effects that flowability of the ferrite powder is improved and mixing property is improved in the case where the resin material is in the form of powder, and the dispersibility is improved in the case where the resin material is in the form of liquid.

A sphericity ratio can be obtained as follows. First, an image of the ferrite powder is taken at a magnification of 100 to 20,000 times using a scanning electron microscope (for example, FE-SEM (SU-8020, manufactured by Hitachi High-Technologies Corporation) etc.). Then, from the taken SEM image, a circumscribed circle diameter and an inscribed circle diameter of each hard ferrite particle constituting the ferrite powder are obtained, and then a ratio (circumscribed circle diameter/inscribed circle diameter) is obtained as the sphericity ratio. When the two diameters are the same, that is, in the case of a true sphere, this ratio becomes 1.

Furthermore, the ferrite powder of the present invention may contain other particles in addition to the hard ferrite particles as described above. For example, it may contain hard ferrite particles not satisfying the conditions as described above and soft ferrite particles in addition to the hard ferrite particles as described above.

The particles constituting the ferrite powder may be subjected to a surface treatment.

Examples of a surface treatment agent used for the surface treatment of the particles include a silane coupling agent, a phosphoric acid based compound, a carboxylic acid, a fluorine based compound, and the like.

Particularly, if the particles constituting the ferrite powder are subjected to the surface treatment with the silane coupling agent, the aggregation of the particles can be more effectively prevented, so that it is possible to more improve flowability and ease of handling of the ferrite powder or the resin composition containing the ferrite powder. Further, it is possible to further improve the dispersibility of the particles in the molded body in the resin composition.

As the silane coupling agent, for example, a silane compound having a silyl group and a hydrocarbon group can be used. In particular, it is preferred that the silane coupling agent has an alkyl group having a carbon number of 8 or more and 10 or less as the alkyl group.

This makes it possible to further effectively prevent the aggregation of the hard ferrite particles and further improve the flowability and the ease of handling of the ferrite powder or the resin composition containing the ferrite powder. Furthermore, it is possible to further improve the dispersibility of the hard ferrite particles in the molded body in the resin composition.

Examples of the phosphoric acid based compound include lauryl phosphate ester, lauryl-2 phosphate ester, steareth-2 phosphate, phosphate ester of 2-(perfluorohexyl) ethylphosphonic acid, and the like.

As the carboxylic acid, for example, a compound (fatty acid) having a hydrocarbon group and a carboxyl group can be used. Specific examples of such a compound include decanoic acid, tetradecanoic acid, octadecanoic acid, cis-9-octadecenoic acid and the like.

Examples of the fluorine based compound include the silane coupling agent as described above, a phosphoric acid based compound, a compound having a structure in which at least a part of hydrogen atoms of the carboxylic acid is substituted with fluorine atoms (fluorine based silane compound, fluorine based phosphate compound, fluorine-substituted fatty acid), and the like.

Residual magnetization of the ferrite powder by a VSM measurement when a magnetic field of 10 K·1000/4πA/m is applied is preferably 25 A·m²/kg or more and 40 A·m²/kg or less, and more preferably 27 A·m²/kg or more and 38 A·m²/kg or less.

This makes it possible to more improve toughness, the strength and the like of the molded body while further improving the easiness of the detection of the molded body produced using the ferrite powder by the metal detector. It is also advantageous in suppressing a production cost of the molded body.

On the other hand, if the residual magnetization is less than the lower limit value noted above, unless a content rate of the ferrite powder in the molded body produced using the ferrite powder is increased, the easiness of the detection of the molded body by the metal detector becomes insufficient. In addition, if the content rate of the ferrite powder in the molded body is increased in order to improve the easiness of the detection by the metal detector, the toughness and the strength of the molded body are decreased with ease.

Furthermore, if the residual magnetization exceeds the upper limit value noted above, in order to realize magnetic properties, adjustment of the composition of the ferrite powder becomes complicated, and it becomes difficult to stably obtain superior properties. Further, even if the residual magnetization exceeds the upper limit value noted above, practically it is not expected to further improve the easiness of the detection of the molded body containing the ferrite powder or the ferrite powder by the metal detector.

Saturation magnetization of the ferrite powder by the VSM measurement when the magnetic field of 10 K·1000/4πA/m is applied is preferably 45 A·m²/kg or more and 70 A·m²/kg or less, and more preferably 47 A·m²/kg or more and 65 A·m²/kg or less.

This makes it possible to more improve the toughness, the strength and the like of the molded body while further improving the easiness of the detection of the molded body produced using the ferrite powder by the metal detector. It is also advantageous in suppressing the production cost of the molded body.

On the other hand, if the saturation magnetization is less than the lower limit value noted above, unless the content rate of the ferrite powder in the molded body produced using the ferrite powder is increased, the easiness of the detection by the metal detector becomes insufficient. In addition, if the content rate of the ferrite powder in the molded body is increased in order to improve the easiness of the detection by the metal detector, the toughness and the strength of the molded body are decreased with ease.

Further, if the saturation magnetization exceeds the upper limit value noted above, in order to realize the magnetic properties, the adjustment of the composition of the ferrite powder becomes complicated, and it becomes difficult to stably obtain the superior properties. Further, even if the saturation magnetization exceeds the upper limit value noted above, practically it is not expected to further improve the easiness of the detection of the molded body containing the ferrite powder or the ferrite powder by the metal detector.

Coercive force of the ferrite powder by the VSM measurement when the magnetic field of 10 K·1000/4πA/m is applied is preferably 39.7 kA/m or more and 320 kA/m or less, and more preferably 55 kA/m or more and 280 kA/m or less.

This makes it possible to more improve the easiness of the detection of the molded body produced using the ferrite powder by the metal detector. It is also possible to suppress the production cost of the molded body.

On the other hand, if the coercive force is less than the lower limit value noted above, in the case where the molded body produced by using the ferrite powder of the present invention is magnetized, sufficient magnetization cannot be obtained, and there is a possibility that the easiness of the detection of the molded body by the metal detector is lowered. Therefore, it is not preferable.

Further, if the coercive force exceeds the upper limit value noted above, in order to realize the magnetic properties, the adjustment of the composition of the ferrite powder becomes complicated, and it becomes difficult to stably obtain the superior properties. Further, even if the coercive force exceeds the upper limit value noted above, practically it is not expected to further improve the easiness of the detection of the molded body containing the ferrite powder or the ferrite powder by the metal detector.

The above magnetic properties, for example, can be obtained as follows. That is, first, a cell with an inner diameter of 5 mm and a height of 2 mm is filled with the ferrite powder and set in a vibration sample type magnetic measurement device. Next, an applied magnetic field is added and swept by 10 K·1000/4π·A/m. Next, the applied magnetic field is decreased to create a hysteresis curve. The saturation magnetization, the residual magnetization and the coercive force can be obtained from the data of this curve. As the vibration sample type magnetic measurement device, for example, VSM-C7-10A (manufactured by TOEI INDUSTRY CO., LTD.) or the like can be used.

In the hard ferrite powder, an amount of Cl (chlorine) measured by the ion chromatography is preferably 1 ppm or more and 100 ppm or less, and more preferably 1 ppm or more and 50 ppm or less.

If the amount of Cl falls within the above range, it is possible to use even the molded body to which the metal powder other than the ferrite powder is added in a stable state for a long period of time.

Although it is preferred that the amount of Cl is less, it is impossible to completely remove a Cl component derived from the impurities contained in the raw material.

Further, if the amount of Cl exceeds the above upper limit value noted above, when the ferrite powder is used as a filler, a compound having the Cl component of the ferrite powder contained in the molded body causes corrosion of the filler added to the molded body or metal materials around the molded body.

In this regard, the amount of Cl (amount of chloride ion) in the hard ferrite powder can be measured, for example, by a combustion method ion chromatography.

The combustion method ion chromatography can be performed under the following conditions, for example.

- Combustion device: AQF-2100H manufactured by Mitsubishi Chemical Analytech Co., Ltd.
- Sample amount: 50 mg
- Combustion temperature: 1100°C
- Combustion time: 10 minutes
- Ar flow rate: 400 ml/min
- O₂ flow rate: 200 ml/min
- Humidified Air flow rate: 100 ml/min
- Absorption liquid: eluent containing 1% hydrogen peroxide

- Analyzer: IC-2010 manufactured by TOSOH CORPORATION
- Column: TSKgel SuperIC-Anion HS (4.6 mm I. D. × 1 cm + 4.6 mm I. D. × 10 cm)
- Eluent: NaHCO₃ (3.8 mmol/L) + Na₂CO₃ (3.0 mmol/L)
- Flow rate: 1.5 mL/min
- Column temperature: 40°C
- Injection volume: 30 µL
- Measurement mode: Suppressor mede
- Detector: CM detector
- Standard sample: Anion mixture standard solution manufactured by Kanto Chemical Co., Inc.

In the hard ferrite powder, an amount of S (sulfur) measured by the ion chromatography is preferably 1 ppm or more and 1000 ppm or less, and more preferably 1 ppm or more and 200 ppm or less.

If the amount of S falls within the above range, it is possible to produce the molded body in a stable state and use in the stable state for a long period of time.

Although it is preferred that the amount of S is less, it is impossible to completely remove a S component derived from the impurities contained in the raw material.

On the other hand, if the amount of S exceeds the upper limit value noted above, when the ferrite powder is used as the filler, there is a fear that the viscosity tends to increase at the time of mixing with the resin material, or S reacts with another additive and therefore the molded body is altered at the time of using the molded body for a long time of period.

The ferrite powder of the present invention may be produced by any method, but it can be suitably produced by, for example, the method as described below.

That is, first, Fe₂O₃ and SrCO₃ as the raw material are dry-mixed.

The dry mixing is carried out, for example, with a Henschel mixer or the like. They are mixed for 1 minute or longer and preferably 3 minutes or longer and 60 minutes or shorter, and granulated.

Thereafter, the granulated product thus obtained is sintered.

The sintering of the granulated product can be carried out, for example, by using a fixed electric furnace or the like.

The sintering conditions are not particularly limited, but for example it is possible to set to the temperature: 1050°C or more and 1250°C or less and the sintering time 2 hours or more and 8 hours or less (peak) in the atmosphere.

Thereafter, the sintered product obtained by the sintering is wet-pulverized by a bead mill or the like, washed, dehydrated, dried and then subjected to a heat treatment.

The conditions of the heat treatment are not particularly limited, but for example, it is possible to set to the temperature: 750°C or more and 1050°C or less and the heating time: 0.1 hour or more and 2 hours or less .

In the case where the ferrite powder contains the other particles in addition to the hard ferrite particles as described above, it is possible to obtain intended ferrite powder by mixing the powder containing the plurality of hard ferrite particles obtained as described above and the other particles.

### «Resin composition»

Next, description will be made on the resin composition of the present invention.

The resin composition of the present invention contains the ferrite powder of the present invention as described above and a resin material.

This makes it possible to provide the resin composition that can be suitably used for producing the molded body having excellent easiness of the detection and excellent stability of the detection by the metal detector.

In the resin composition of the present invention, the ferrite powder may be contained in any form, but is preferably dispersed in the resin material.

This makes it possible to further improve the ease of handling of the resin composition and carry out the forming of the molded body described later more reliably. Further, it is possible to effectively prevent occurrence of unintentional variation of the content rate of ferrite powder in each part of the molded body, and more improve the reliability of the detection of the molded body containing the ferrite powder by the metal detector.

A content rate of the ferrite powder in the resin composition is not particularly limited, but is preferably 5.0 mass% or more and 90 mass% or less, and more preferably 7.0 mass% or more and 88 mass% or less.

This makes it possible to further improve the moldability of the molded body and to further improve the easiness of the detection and the stability of the detection of the molded body by the metal detector, while enabling the toughness, the strength, the reliability and the like of the molded body to be improved.

On the other hand, if the content rate of the ferrite powder in the resin composition is less than the lower limit value noted above, depending on the composition of the hard ferrite particles or the like, there is a possibility that the easiness of the detection and the stability of the detection of the molded body by the metal detector become insufficient.

Further, if the content rate of the ferrite powder in the resin composition exceeds the upper limit value noted above, there is a possibility that the moldability of the molded body decreases as well as the toughness, the strength, the reliability and the like of the molded body decrease.

Examples of the resin material contained in the resin composition include various kinds of thermoplastic resins, various kinds of curable resins and the like.

More specifically, examples of such a resin material include: polyolefin such as polyethylene, polypropylene, poly-(4-methylpentene-1), an ethylenepropylene copolymer, cyclic polyolefin and the like; modified polyolefin; polystyrene; a butadiene-styrene copolymer; an acrylonitrile-butadiene-styrene copolymer (ABS resin); an acrylonitrile-styrene copolymer (AS resin); polyvinyl chloride; polyvinylidene chloride; an ethylene-vinyl acetate copolymer (EVA); polyamide (e.g.: nylon 6, nylon 46, nylon 66, nylon 610, nylon 612, nylon 11, nylon 12, nylon 6-12, nylon 6-66); polyimide; polyamideimide; an acrylic based resin such as polymethyl methacrylate; polycarbonate (PC); an ionomer; polyvinyl alcohol (PVA); an ethylene-vinyl alcohol copolymer (EVOH); polyester such as polyethylene terephthalate (PET), polybutylene terephthalate (PBT), polycyclohexane terephthalate (PCT), polyarylate, aromatic polyester (liquid crystal polymer) and the like; polyether; polyacetal (POM); polyphenylene oxide; modified polyphenylene oxide; polyether ketone (PEK); polyether ether ketone (PEEK); polyether imide; polysulfone; polyether sulfone; polyphenylene sulfide; a fluorine based resin such as polytetrafluoroethylene, polyvinylidene fluoride and the like; a rubber material such as silicone rubber, isoprene rubber, butadiene rubber, nitrile rubber, natural rubber and the like; various kinds of thermoplastic elastomers such as a styrene type elastomer, a polyolefin type elastomer, a polyvinyl chloride type elastomer, a polyurethane type elastomer, a polyester type elastomer, a polyamide type elastomer, a polybutadiene type elastomer, a trans polyisoprene type elastomer, a fluoro rubber type elastomer, a chlorinated polyethylene type elastomer and the like; an epoxy resin; a phenol resin; an urea resin; a melamine resin; unsaturated polyester; a silicone resin; polyurethane and the like; or a copolymer, a blend and a polymer alloy mainly containing these; and the like. They can be used singly or in combination of two or more of them.

Among them, it is preferred that the resin material contained in the resin composition contains one or more kinds selected from the group consisting of the polyethylene, the polypropylene, the polyvinyl chloride, the polyvinylidene chloride, the polyvinyl alcohol (PVA), the fluorine based resin, the silicone rubber, the butadiene rubber, the thermoplastic elastomer, the epoxy resin and the silicone resin.

This makes it possible to improve dispersion stability of the ferrite powder in the resin composition and the moldability of the molded body more. Further, it is possible to more improve the toughness, the strength, the reliability and the like of the molded body.

Particularly, in the case where the particles constituting the ferrite powder are subjected to a surface treatment with a silane coupling agent, adhesion to various kinds of resins is improved, so that it is possible to more improve the dispersion stability of the ferrite powder in the resin composition and the moldability of the molded body further.

Further, the resin material contained in the resin composition may have a composition different from the resin material contained in the molded body produced using the resin composition. For example, the resin material contained in the resin composition may be a precursor (for example, a monomer, a dimer, a trimer, an oligomer, a prepolymer or the like) of the resin material contained in the finally obtained molded body.

A content rate of the resin material in the resin composition is not particularly limited, but is preferably 8.0 mass% or more and 95 mass% or less, and more preferably 10 mass% or more and 90 mass% or less.

This makes it possible to further improve the moldability of the molded body and to further improve the easiness of the detection and the stability of the detection of the molded body by the metal detector while enabling the toughness, the strength, the reliability and the like of the molded body to be further improved.

On the other hand, if the content rate of the resin material in the resin composition is less than the lower limit value noted above, there is a possibility that the moldability of the molded body decreases as well as the toughness, the strength, the reliability and the like of the molded body decrease.

Further, if the content rate of the resin material in the resin composition exceeds the upper limit value noted above, the content rate of the ferrite powder relatively decreases. Depending on the composition of the hard ferrite particles or the like, there is a possibility that the easiness of the detection and the stability of the detection of the molded body by the metal detector become insufficient.

The resin composition of the present invention may contain the ferrite powder and the resin material and may further contain a component (other component) other than them.

Examples of such a component (other component) include: various kinds of coloring agents such as pigments and dyes; various kinds of fluorescent materials; various kinds of light storing materials; various kinds of phosphorescent materials; a solvent; an infrared absorbing material; an ultraviolet absorbing material; a dispersant; a surfactant; a polymerization initiator; a polymerization accelerator; a crosslinking agent; a polymerization inhibitor; a sensitizer; a plasticizer; a slip agent (a leveling agent); a penetration accelerator; a wetting agent (a moisturizing agent); an antistatic agent; a fixing agent; an antiseptic agent; an antifungal agent; an antioxidant; a chelating agent; a pH adjusting agent; a thickening agent; a filler such as alumina, silica, titanium oxide, magnesium oxide, antimony oxide, calcium oxide, zinc oxide, aluminum hydroxide, magnesium hydroxide, calcium carbonate, potassium titanate, a glass fiber, a carbon fiber, a gypsum fiber, a metal fiber, metal particles, graphite, talc, clay, mica, wollastonite, xonotlite, hydrotalcite, zeolite and the like; an agglutination preventing agent; a defoamer; a foaming agent; and the like.

The resin composition of the present invention may be in any form. Examples of the form of the resin composition include a powder form, a pellet form, a dispersion liquid form, a slurry form, a gel form and the like. However, the pellet form is preferable.

This makes it possible to further improve the ease of handling of the resin composition and more suitably produce the molded body using the resin composition. Further, it is possible to further improve the storage stability of the resin composition, so that it is possible to more effectively prevent the constituent materials of the resin composition from being degraded at the time of storage.

In the case where the resin composition is in the pellet form, a volume average particle diameter thereof is preferably 1 mm or more and 10 mm or less, and more preferably 2 mm or more and 7 mm or less.

This makes it possible to further improve the ease of handling of the resin composition and more suitably produce the molded body using the resin composition.

The resin composition of the present invention can be produced, for example, by mixing the ferrite powder described above and the resin material. The mixing of the ferrite powder and the resin material can be carried out reliably by using a mixing device (kneading device) such as a stirring kneader such as a planetary mixer, a twin screw mixer, a kneader, a banbury mixer, an oven roll and the like, a single screw extruder, a twin screw extruder, and the like.

In addition, for example, the other component as described above may be further used at the time of mixing, if necessary.

### «Molded Body»

Next, description will be made on the molded body of the present invention.

The molded body of the present invention has a portion formed using the resin composition of the present invention as described above.

This makes it possible to provide the molded body which can be stably detected by the metal detector.

Further, by including the ferrite powder as described above, it is possible to further improve the strength, durability and the like of the molded body, for example, when an external force such as tension or bending is applied, particularly even when a large external force is applied or when the external force is applied repeatedly, it is more effectively prevented that a part of the molded body is detached by cutting or the like. Therefore, it is possible to more effectively prevent the part of the molded body itself from being mixed as the foreign matter in the product or the like.

The molded body of the present invention may have at least a portion formed by using the resin composition of the present invention and the whole thereof may be formed using the resin composition of the present invention. In addition to the portion formed using the resin composition of the present invention, it may have a portion constituted of a material other than the resin composition of the present invention.

More specifically, for example, the molded body has a base portion constituted of the material other than the resin composition of the present invention and a surface layer formed on a surface of the base portion and formed using the resin composition of the present invention.

Further, the molded body of the present invention may be molded by, for example, mixing the resin composition of the present invention with another resin composition (a composition not containing the ferrite powder of the present invention).

It is preferable that the molded body includes the ferrite powder in at least the vicinity of its surface.

More specifically, the molded body preferably includes the ferrite powder in a region within 1.0 mm in a thickness direction from its surface, and more preferably includes the ferrite powder in a region within 0.5 mm in the thickness direction from the surface.

The vicinity of the surface of the molded body is a portion which is particularly easy to be detached in the molded body. Therefore, by including the ferrite powder in such a region, the effect of the present invention can be more remarkably exhibited.

In this regard, it is possible to reliably produce such a molded body, for example, by giving it a magnetic field from a direction to become the surface of the molded body at the time of forming the molded body (in a state that the resin material constituting the resin composition is softened or melted). In particular, in the case of the molded body having a relatively large thickness, the above-described ferrite can be unevenly distributed in the vicinity of the surface of the molded body, and the above-mentioned effect can be exhibited more remarkably.

The content rate of the ferrite powder in the molded body of the present invention varies depending on applications of the molded body, but it is preferably 2.0 mass% or more and 20 mass% or less, and more preferably 2.5 mass% or more and 18 mass% or less.

This makes it possible to further improve the easiness of the detection and the stability of the detection of the molded body by the metal detector, while enabling the toughness, the strength, the reliability and the like of the molded body to be improved.

In the case where the molded body has the portion not containing the ferrite powder (that is, the portion constituted of the material other than the resin composition of the present invention) in addition to the portion containing the ferrite powder (that is, the portion formed by using the resin composition of the present invention), it is preferable to meet the conditions concerning the content rate of the ferrite powder as described above in the portion containing the ferrite powder.

The molded body of the present invention may be used for any applications as long as there is a possibility that all or a part (for example, a section of the molded body) of the molded body is applied to the detection according to the metal detection, in other words, it is used as a purpose to be detected by the metal detector. Examples of the applications of the molded body of the present invention include: a field application for manufacturing, processing and packaging (including stowage, the same applies to the following) the food; a field application for manufacturing, processing and packaging cosmetics and quasi-drugs; a field application for manufacturing, processing and packaging pharmaceuticals; a field application for manufacturing, processing and packaging products other than the above; a field application for medical use; a field application for performing a biological treatment such as cell culture, tissue culture, organ culture, gene recombination and the like; a field application for performing a chemical treatment such as a compound synthesis and the like.

Among those, the molded body of the present invention is preferably used for the field application for manufacturing, processing and packaging the food.

The food is required to have high safety, but in general, the manufacturing, processing and packaging are carried out in an environment where the foreign matters are mixed easily. Therefore, by applying the present invention to articles used in the field application for manufacturing, processing and packaging the food, the effect of the present invention can be more remarkably exhibited.

Further, many articles (for example, various kinds of cooking utensils, various kinds of containers, trays, wrapping films, and the like) applied to a microwave oven are included in the articles used in the field application for manufacturing and processing the food, but in the molded body of the present invention, since the ferrite which is a non-metal material is used, it can suitably be used for the microwave oven.

In this regard, in this specification, a form of the food includes a liquid state in addition to a solid state and a semi-solid state (a gel state such as a jelly, a purine, etc.), and the food includes a drink and the like in the concept thereof. The food also includes a food additive and a supplement (health supplement) in the concept thereof. Furthermore, the food also includes artificial syntheses such as an artificial sweetener and an artificial seasoning, in addition to natural products such as animal derived meat, fish and shellfish, plant derived vegetables, fruits, seeds, cereals, legumes and seaweeds and processed products thereof in the concept of the food.

Examples of the molded body used in the field application for manufacturing and processing the food include: a cooking appliance; a cooking utensil; a food preparation tool; tableware; clothes (articles to be worn on a human body); a packaging member used for packaging the food; and articles to be used in association therewith; and articles used for maintenance, repair and the like of these; and the like.

More specifically, examples of the cooking appliance include: a hot plate, a stove, a gas burner, an oven, a toaster, a microwave oven, a dish washer, a dish dryer, a scale, a kitchen timer, a thermometer, a water purifier, a water purification filter (cartridge) and the like. Examples of the cooking utensil include: a pot, a frying pan, a kettle, these lids, a kitchen knife, scissors, a ladle, a spatula, a peeler, a slicer, a mixer, a chopper, a masher, a noodle rod, a muddler, a whisk, a bamboo basket, a bowl, a drainer, a chopping board, a mat, a rice paddle, a molding die, a clicker die, a foam removal, a grater (food grader), a fly return (turner), a pick, a sieve, a mill, a drop lid, an ice tray, a grill net, a tongue, an egg cutter, a measuring cup, a measuring spoon, and the like. Examples of the food preparation tool include: a dish towel, kitchen paper, washcloth, a towel, a paper towel, a draining sheet, a wrapping film, oven paper, a squeezing bag, a trivet, a pot stand, and the like. Examples of the tableware include: a dish, a cup, a bowl, chopsticks (including chopsticks for cooking), a spoon, a fork, a knife, a crab shellfish femoral walking leg extraction device (a crab spoon, a crab fork), and the like. Examples of the clothes (the articles to be worn on the human body) include: an apron, a white coat, a mask, a glove, shoes, socks, underwear, head gear, eyeglasses, and the like. Examples of the food packaging member include: a food packaging film such as a food laminating film, a packaging tube, a food storage bottle, a plastic sealing container and the like. Examples of others include: a net for dried fish, a hose, a cutting board stand, a dish stand, a sponge, a scrubber, a detergent container, a grinding stone, a sharpener, these constituent members and the like. However, they are not limited thereto.

In particular, the molded body of the present invention is preferably used for a part or all of the cooking utensil, the food preparation tool, or the food packaging member.

Thus, among various kinds of molded bodies, at least a part of such a molded body is likely to be mixed in the food in the field for manufacturing, processing and packaging the food and the like, particularly. Therefore, when the present invention is applied to the molded body as described above, the effect of the present invention is more remarkably exhibited.

Further, in the case of applied to a medical field, for example, when misplacement of a medical instrument or a medical device in the body happens at the time of surgery, it can be easily detected, so that it is possible to more effectively prevent the serious medical malpractice cases from developing.

Various kinds of molding methods can be used as a method of producing the molded body. Examples thereof include: a molding method such as a injection molding method (a insert molding method, a multicolor molding method, a sandwich molding method, an injection molding method, etc.), an extrusion molding method, an inflation molding method, a T-die film molding method, a laminate molding method, a blow molding method, a hollow molding method, a compression molding method, a calendar molding method and the like; an optical molding method; a three-dimensional laminate molding method; and the like.

Further, in the case where the resin composition contains a curable resin, a curing reaction of the curable resin is performed. The curing reaction is performed differently depending on a kind of the curable resin and the like, but can be performed by heating, irradiating energy rays such as ultraviolet rays, or the like.

Further, at the time of producing the molded body, another material (for example, a resin material for dilution) in addition to the resin composition of the present invention may be used.

Further, at the time of producing the molded body, plural kinds of the resin composition of the present invention may be used in combination.

In the case where the molded body has the base portion formed using the material other than the resin composition described above and the surface layer provided on the base portion and formed using the resin composition of the present invention, the molded body may be produced by forming the surface layer using a coating method such as dipping and brush coating or the various kinds of printing methods such as an inkjet method on the base portion produced by the method as described above or a method such as casting, forging, a powder injection molding (PIM) and the like.

Further, it may be magnetized during the forming of the molded body. As a result, it is possible to further improve the easiness of the detection and the stability of the detection of the molded body by the metal detector.

Further, the molded body may be produced by subjecting to a post-treatment such as grinding or polishing with regard to the molded body obtained by the molding method as described above.

Although the preferred embodiments of the present invention have been described above, the present invention is not limited thereto.

For example, in the above-described embodiments, the case where the ferrite powder is dispersed in the resin material in the resin composition has been mainly described. However, in the resin composition of the present invention, for example, the ferrite powder is precipitated in the liquid and may be used after being dispersed by stirring as necessary. Further, for example, the resin composition of the present invention may be a dispersant body in which the ferrite powder and the resin particles are dispersed in a volatile liquid. Further, the resin composition of the present invention may have, for example, a configuration in which the ferrite powder and the resin powder are merely mixed.

### EXAMPLES

Hereinafter, the present invention will be described in detail based on Examples and Comparative Examples, but the present invention is not limited thereto.

### «1» Production of ferrite powder

Ferrite powder of each of the Examples and the Comparative Examples was produced as follows.

### (Example A1)

First, Fe₂O₃ and SrCO₃ were prepared. These were put into a Henschel mixer at a molar ratio of 5.6: 1.0, and then dry-mixed for 10 minutes and granulated.

Using a fixed electric furnace, the obtained granulated product was sintered at 1075°C for 4 hours (peak) in the air.

Further, the obtained sintered product by the above sintering was wet-pulverized with a bead mill under the conditions of a solid content: 60 mass% for 30 minutes, washed, dehydrated, dried and then subjected to a heat treatment at 850°C for 1 hour (peak) in the air to obtain ferrite powder.

A content rate of Sr in the particles (hard ferrite particles) constituting the ferrite powder thus obtained was 8.78 mass% and a content rate of Fe was 62.3 mass %.

A content rate of each metal element (Fe, Sr, etc.) in the particles constituting the ferrite powder was determined as follows. That is, the ferrite particles: 0.2 g were weighed, a mixture obtained by adding 1 N hydrochloric acid: 20 ml and 1 N nitric acid: 20 ml to pure water: 60 ml was heated to prepare an aqueous solution in which the ferrite particles were completely dissolved. Then, the content rate of each metal element was determined by performing measurement using an ICP analysis device (manufactured by Shimadzu Corporation, ICPS-1000 IV). In each of the Examples and the Comparative Examples to be described later, a content rate was also obtained in the same manner.

Further, a volume average particle diameter of the particles constituting the ferrite powder was 1.8 µm.

The volume average particle diameter was determined by the following measurement. That is, first, the ferrite powder: 10 g as a sample and water: 80 ml were placed in a 100 ml beaker and 2 drops of a dispersant (sodium hexamethaphosphate) was added thereto. Next, dispersion was carried out using an ultrasonic homogenizer (UH-150 type manufactured by SMT. Co. LTD.). At this time, the output level of the ultrasonic homogenizer was set to 4 and the dispersion was carried out for 20 seconds. Thereafter, foam formed on a surface of the beaker was removed, and then it was introduced into a Microtrac particle size analyzer (for example, Model 9320-X100 manufactured by Nikkiso Co., Ltd.) to carry out the measurement. In each of the Examples and the Comparative Examples to be described later, a volume average particle diameter was also obtained in the same manner.

Further, the measurement of the ferrite powder using a vibration sample type magnetic measurement device was carried out. As a result, saturation magnetization σs was 55.8 A·m²/kg, residual magnetization or was 33.4 A·m²/kg, and coercive force Hc was 285 kA/m.

The above magnetic properties were determined as follows. That is, first, a cell with an inner diameter of 5 mm and a height of 2 mm was filled with the ferrite powder and set in the vibration sample type magnetic measurement device (VSM-C7-10A manufactured by TOEI INDUSTRY Co., LTD.). Next, an applied magnetic field was applied, swept to 10 K·1000/4π·A/m, and then decreased to create a hysteresis curve. Thereafter, the saturation magnetization σs, the residual magnetization or and the coercive force Hc were obtained from this curve data. In each of the Examples and the Comparative Examples to be described later, they were also obtained in the same manner.

Further, the measurement of a cation content rate of the hard ferrite powder was carried out as follows.

First, 10 ml of ultrapure water (Direct-Q UV3 manufactured by Merck KGaA) was added to 1 g of the ferrite powder and an ion component was extracted by irradiating with the ultrasonic wave for 30 minutes.

Next, a supernatant of the obtained extract was filtrated with a disposable disk filter (W-25-5 manufactured by TOSOH CORPORATION, a pore diameter 0.45 µm) for a pretreatment to prepare a measurement sample.

Next, a cation component contained in the measurement sample was quantitatively analyzed by the ion chromatography under the following conditions and converted into the content rate of the ferrite powder.

- Analyzer: IC-2010 manufactured by TOSOH CORPORATION
- Column: TSKgel SuperIC-Cation HSII (4.6 mm I.D. × 1 cm + 4.6 mm I.D. × 10 cm)
- Eluent: Methanesulfonic acid (3.0 mmol/L) + 18-crown 6-ether (2.7 mmol/L)
- Flow rate: 1.0 mL/min
- Column temperature: 40°C
- Injection volume: 30 µL
- Measurement mode: Non-suppressor mode
- Detector: CM detector
- Standard sample: Cation mixture standard solution manufactured by Kanto Chemical Co., Inc.

On the other hand, the measurement of an anion content rate was carried out by quantitatively analyzing the anion component contained in the ferrite powder with a combustion method ion chromatography under the following conditions.

- Combustion apparatus: AQF-2100H manufactured by Mitsubishi Chemical Analytech Co., Ltd.
- Sample amount: 50 mg
- Combustion temperature: 1100°C
- Combustion time: 10 minutes
- Ar flow rate: 400 ml/min
- O₂ flow rate: 200 ml/min
- Humidified Air flow rate: 100 ml/min
- Absorption liquid: eluent containing 1% hydrogen peroxide

- Analyzer: IC-2010 manufactured by TOSOH CORPORATION
- Column: TSKgel Super- IC-Anion HS (4.6 mm I.D. × 1 cm + 4.6 mm I.D. × 10 cm)
- Eluent: NaHCO₃ (3.8 mmol/L) + Na₂CO₃ (3.0 mmol/L)
- Flow rate: 1.5 mL/min
- Column temperature: 40°C
- Injection volume: 30 µL
- Measurement mode: Suppressor mode
- Detector: CM detector
- Standard sample: Anion mixture standard solution manufactured by Kanto Chemical Co., Inc.

In this regard, in each of the Examples and each of the Comparative Examples described later, the measurement of the cation content rate and the measurement of the anion content rate were carried out in the same manner as described above.

### (Examples A2 and A3)

Ferrite powders were produced in the same manner as in the Example A1, except that the ratio of the materials used for producing the granulated product was set as shown in Table 1.

### (Example A4)

First, Fe₂O₃ and SrCO₃ were prepared and these were mixed at a molar ratio of 5.75: 1.0. Subsequently, this mixture was pulverized with a dry media mill (vibration mill, stainless steel beads each having a diameter of 1/8 inch) for 4.5 hours. The obtained pulverized product was made into pellets of about 1 mm square by a roller compactor. Coarse powder included in the pellets was removed with a vibration sieve having openings of 3 mm, and then fine powder was removed with a vibration sieve having openings of 0.5 mm. Thereafter, the pellets were heated in a rotary type electric furnace at 1080°C for 3 hours and pre-sintered to obtain a calcined material.

Next, using the dry media mill (vibrating mill, stainless steel beads each having a diameter of 1/8 inch), the calcined material was pulverized until the volume average particle diameter became about 4 µm. Then, water was added thereto and it was further pulverized using a wet type media mill (vertical bead mill, stainless steel beads each having a diameter of 1/16 inch) for 10 hours. Then, an aqueous solution (20 mass% solution) of polyvinyl alcohol (PVA) as a binder was added thereto to obtain a slurry. A solid content in the slurry was 55.0 mass% and a content rate of the binder was 1.0 mass%.

Next, the obtained slurry was spray-dried with a spray dryer to obtain a granulated product.

Thereafter, a particle size of the obtained granulated product was adjusted. Further, it was heated in a rotary electric furnace at 650°C for 2 hours to remove the binder.

Thereafter, using the fixed electric furnace, the obtained granulated product was sintered at 1185°C for 4 hours (peak) in the air, further disintegrated and classified to obtain ferrite powder.

A content rate of Sr in the particles (hard ferrite particles) constituting the ferrite powder thus obtained was 8.52 mass% and a content rate of Fe was 62.7 mass%.

A volume average particle diameter of the particles constituting the ferrite powder was 15.0 µm.

Further, the measurement of the ferrite powder using the vibration sample type magnetic measurement device (VSM-C7-10A manufactured by TOEI INDUSTRY Co., LTD.) was carried out. As a result, saturation magnetization σs was 55.3 A·m²/kg, residual magnetization or was 32.4 A·m²/kg and coercive force Hc was 161 kA/m.

### (Example A5)

Ferrite powder was produced in the same manner as in the Example A4, except that the conditions of the pulverizing treatment to the pre-sintered product, the conditions of spray drying by the spray dryer, and the condition of adjusting the particle size to the granulated product were changed.

The volume average particle diameter of the particles constituting the thus obtained ferrite powder was 39.0 µm.

### (Comparative Examples A1, A2)

Ferrite powders were produced in the same manner as in the Example A1, except that the ratio of the materials used for producing the granulated product was set as shown in Table 1.

### (Comparative Example A3)

Ferrite powder was produced in the same manner as in the Example A1, except that Fe₂O₃ and carbon black (C) were used as the raw material for producing the granulated product, a main sintering treatment was carried out under the conditions of 1000°C for 4 hours (peak) in a nitrogen atmosphere, and the heat treatment to the pulverized product by wet grinding was omitted.

### (Comparative Example A4)

Ferrite powder was produced in the same manner as in the Example A2, except that the hard ferrite particles obtained by adding NaCl: 10 parts by mass as a flux to the pulverized product: 90 parts by mass before the heat treatment and decanting with warm water after the heat treatment was washed with water until an electric conductivity of a cleaning liquid became 0.1 mS/m or less and dried.

### (Comparative Example A5)

Ferrite powder was produced in the same manner as in the Example A2, except that the hard ferrite particles obtained by adding Na₂SO₄: 50 parts by mass as a flux to the pulverized product: 50 parts by mass before the heat treatment and decanting with warm water after the heat treatment was washed with water until an electric conductivity of a cleaning liquid became 0.1 mS/m or less and dried.

The production conditions of the ferrite powder of each of the Examples and the Comparative Examples described above are shown as a whole in Table 1, and the properties and the like of the ferrite powder are shown as a whole in Table 2.

In each ferrite powder of the Examples A4 and A5, among the hard ferrite particles constituting the ferrite powder, a proportion of the particles having a sphericity of 1 or more and 1.2 or less was 90% by number or more. On the other hand, in each of the Comparative Examples, a proportion of the particles having the sphericity of 1 or more and 1.2 or less was less than 1% by number. In this regard, the sphericity was determined as follows. That is, first, the ferrite powder was photographed at a magnification of 200,000 times using a scanning electron microscope (for example, FE-SEM (SU-8020, manufactured by Hitachi High-Technologies Corporation) etc.). Next, from the photographed SEM image, the circumscribed circle diameter and the inscribed circle diameter of each hard ferrite particle constituting the ferrite powder were obtained. Thus, a ratio (circumscribed circle diameter / inscribed circle diameter) thereof was obtained as a spherical ratio.

### Table 1

**Table 1**

| | Molar ratio of raw material | | | Glanulation method | | | Binder removal treatment temperature [°C] | Main sintering conditions | | Pulverizing | Flux additive conditions | | Heat treatment | |
|---|---|---|---|---|---|---|---|---|---|---|---|---|---|---|
| | SrCO₃ | Fe₂O₃ | C | Device | Slurry solid content [mass%] | Binder [mass%] | | Sintering temperature [°C] | Sintering atmosphere | | Flux | Additive amount | Heat treatment temperature [°C] | Treatment time [hr] |
| Example A1 | 1.0 | 5.6 | 0 | Henschel mixer (dry-mixing) | - | None | None | 1075 | Atmosphere | Wet bead mill | None | - | 850 (In atmosphere) | 1 |
| Example A2 | 1.0 | 5. 75 | 0 | Henschel mixer (dry-mixing) | - | None | None | 1075 | Atmosphere | Wet bead mill | None | - | 850 (In atmosphere) | 1 |
| Example A3 | 1.0 | 5.85 | 0 | Henschel mixer (dry-mixing) | - | None | Non e | 1075 | Atmosphere | Wet bead mill | Non e | - | 850 (In atmosphere) | 1 |
| Example A4 | 1.0 | 5. 75 | 0 | Spray dryer | 55.0 | 1.0 | 650 | 1185 | Atmosphere | None | None | - | None | None |
| Example A5 | 1.0 | 5.75 | 0 | Spray dryer | 55.0 | 1.0 | 650 | 1185 | Atmosphere | None | None | - | None | None |
| Comparative Example A1 | 1.0 | 4. 6 | 0 | Henschel mixer (dry-mixing) | - | None | None | 1075 | Atmosphere | Wet bead mill | None | - | 850 (In atmosphere) | 1 |
| Comparative Example A2 | 1.0 | 7.2 | 0 | Henschel mixer (dry-mixing) | - | None | None | 1075 | Atmosphere | Wet bead mill | None | - | 850 (In atmosphere) | 1 |
| Comparative Example A3 | 0 | 6.0 | 1. 1 | Henschel mixer (dry-mixing) | - | None | None | 1000 | In nitrogen | Wet bead mill | None | - | None | None |
| Comparative Example A4 | 1.0 | 5. 75 | 0 | Henschel mixer (dry-mixing) | - | None | None | 1075 | Atmosphere | Wet bead mill | NaCl | 10wt% | 850 (In atmosphere) | 1 |
| Comparative Example A5 | 1.0 | 5.75 | 0 | Henschel mixer (dry-mixing) | - | None | Non e | 1075 | Atmosphere | Wet bead mill | Na₂SO₄ | 50wt% | 1200 (In atmosphere) | 1 |

### T a b l e 2

**Table 2**

| | Average particle size ┌*µ*m┐ | Shape | Tint | VSM | | | Content rate [mass%] | | Ion chromatography measurement value (ppm) | | |
|---|---|---|---|---|---|---|---|---|---|---|---|
| | | | | σS [A·m²/kg] | σr [A·m²/kg] | He [kA/m] | Sr | Fe | Na amount | S amount | C1 amount |
| Example A1 | 1.8 | Amorphous | Black | 55.8 | 33.4 | 285 | 8.78 | 62.3 | 70 | 120 | 18 |
| Example A2 | 1.6 | Amorphous | Black | 56.8 | 34.9 | 282 | 8.57 | 62.8 | 90 | 130 | 15 |
| Example A3 | 1. 7 | Amorphous | Black | 57. 5 | 35.7 | 280 | 8.44 | 63. 1 | 80 | 110 | 17 |
| Example A4 | 15.0 | Sphericity | Gunmetal gray | 55. 3 | 32.4 | 161 | 8. 52 | 62. 7 | 110 | 170 | 12 |
| Example A5 | 39.0 | Sphericity | Gunmetal gray | 55. 7 | 32.9 | 157 | 8.47 | 62.8 | 100 | 150 | 14 |
| Comparative Example A1 | 1.8 | Amorphous | Black | 25.3 | 16.3 | 199 | 10.45 | 60.8 | 120 | 150 | 19 |
| Comparative Example A2 | 1. 5 | Amorphous | Black | 28. 1 | 19.5 | 239 | 6.99 | 64. 1 | 60 | 100 | 17 |
| Comparative Example A3 | 0.8 | Amorphous | Dark brown | 88. 2 | 35.1 | 6.4 | 0 | 69. 4 | 70 | 120 | 23 |
| Comparative Example A4 | 0.7 | Amorphous | Black | 55.8 | 34. 1 | 280 | 8.58 | 62.7 | 410 | 130 | 256 |
| Comparative Example A5 | 0.9 | Amorphous | Black | 56. 1 | 33.9 | 278 | 8.56 | 62. 7 | 750 | 1670 | 32 |

### <<2>> Production of resin composition

Using the ferrite powder of each of the Examples and each of the Comparative Examples as described above, a resin composition was produced as follows.

### (Example B1)

Using a kneader and a pelletizer, the ferrite powder produced in the Example A1 and polypropylene as a resin material were mixed at a mass ratio of 5.0:95.0, kneaded and granulated.

Thus, a resin composition as pellets having a volume average particle size of 3 mm was obtained.

### (Examples B2 to B5)

Resin compositions as pellets were obtained in the same manner as in Example B1, except that the mixing ratios of the ferrite powder and the polypropylene were changed as shown in Table 3.

### (Example B6)

Using a kneader and a pelletizer, the ferrite powder produced in the Example A1, polypropylene as a resin material and silica as a white pigment (AEROSIL 200 manufactured by NIPPON AEROSIL CO., LTD.) were mixed at a mass ratio of 2.0:93.0:5.0, kneaded and granulated.

Thus, a resin composition as pellets having a volume average particle size of 3 mm was obtained.

### (Examples B7 and B8)

Resin compositions as pellets were obtained in the same manner as in the Example B6, except that the mixing ratio of the ferrite powder, the polypropylene and the silica was changed as shown in Table 3.

### (Examples B9 to B13)

Resin compositions as pellets were obtained in the same manner as in the Example B8, except that a kind of the ferrite powder and a kind of the resin material were changed as shown in Table 3.

### (Example B14)

Using a ball mill, the ferrite powder produced in the Example A4, nylon resin powder and silica particles as a white pigment were mixed in the same mass ratio as that in the Example B12 to obtain a resin composition in a powder form.

### (Example B15)

A resin composition in a powder form was obtained in the same manner as in Example B14, except that a kind of the resin material was changed as shown in Table 3.

### (Comparative Examples B1 to B5)

Resin compositions as pellets were obtained in the same manner as in the Example B6, except that a kind of the ferrite powder was changed to the ferrite powders produced in the Comparative Examples A1 to A5, respectively, and a mixing amount of each component was changed.

### (Comparative Example B6)

A resin composition as pellets was obtained in the same manner as in the Example B6, except that iron powder (metal powder) was used instead of the ferrite powder and a mixing amount of each component was changed.

The conditions of the resin composition of each of the Examples and the Comparative Examples described above are shown as a whole in Table 3. Further, in the column of the MFR in Table 3, a value of a melt flow rate (MFR) when measured under the conditions of a temperature: 190°C and a load: 2.16 kg based on JIS K 7210 is shown.

### Table 3

**Table 3**

| | Ferrite powder | | Resin material | | Coloring agent | | Molding method | Color of resin composition (pellets) | MFR [g/10 minutes] |
|---|---|---|---|---|---|---|---|---|---|
| | Kind | Content rate [mass%] | Kind | Content rate [mass%] | Kind | Content rate [mass%] | | | |
| Example B1 | Example A1 | 5.0 | Polypropylene | 95.0 | None | None | Kneader+Pelletizer | Black | 32.5 |
| Example B2 | Example A1 | 20.0 | Polypropylene | 80.0 | None | None | Kneader+Pelletizer | Black | 34.2 |
| Example B3 | Example A1 | 50.0 | Polypropylene | 50.0 | None | None | Kneader+Pelletizer | Black | 37.2 |
| Example B4 | Example A1 | 85. 0 | Polypropylene | 15.0 | None | None | Kneader+Pelletizer | Black | 38.2 |
| Example B5 | Example A1 | 90.0 | Polypropylene | 10.0 | None | None | Kneader+Pelletizer | Black | Not flow |
| Example B6 | Example A1 | 2.0 | Polypropylene | 93.0 | SiO₂ | 5.0 | Kneader+Pelletizer | Light gray | 32.4 |
| Example B7 | Example A1 | 10. 0 | Polypropylene | 85.0 | SiO₂ | 5.0 | Kneader+Pelletizer | Light gray | 33.0 |
| Example B8 | Example A1 | 20. 0 | Polypropylene | 75.0 | SiO₂ | 5.0 | Kneader+Pelletizer | Light gray | 35.1 |
| Example B9 | Example A2 | 20.0 | Polyethylene | 75. 0 | SiO₂ | 5.0 | Kneader+Pelletizer | Light gray | 3. 6 5 |
| Example B10 | Example A1 | 20. 0 | Polyvinyl chloride | 75.0 | SiO₂ | 5.0 | Kneader+Pelletizer | Light gray | 5.46 |
| Example B11 | Example A3 | 20.0 | Polyvinylidene chloride | 75.0 | SiO₂ | 5.0 | Kneader+Pelletizer | Light gray | 4.33 |
| Example B12 | Example A4 | 20.0 | Nylon | 75.0 | SiO₂ | 5.0 | Kneader+Pelletizer | Light gray | 8.11 |
| Example B13 | Example A5 | 20.0 | Fluorine based resin | 75.0 | SiO₂ | 5.0 | Kneader+Pelletizer | Light gray | 14.4 |
| Example B14 | Example A4 | 20. 0 | Nylon | 75.0 | SiO₂ | 5.0 | Ball mill | Light gray | - |
| Example B15 | Example A4 | 20.0 | Fluorine based resin | 75.0 | SiO₂ | 5.0 | Ball mill | Light gray | - |
| Comparative Example B1 | Comparative Example A1 | 5.0 | Polypropylene | 90.0 | SiO₂ | 5.0 | Kneader+Pelletizer | Light gray | 32.5 |
| Comparative Example B2 | Comparative Example A2 | 5.0 | Polypropylene | 90. 0 | SiO₂ | 5.0 | Kneader+Pelletizer | Light gray | 32.5 |
| Comparative Example B3 | Comparative Example A3 | 5.0 | Polypropylene | 90. 0 | SiO₂ | 5.0 | Kneader+Pelletizer | Light gray | 32.5 |
| Comparative Example B4 | Comparative Example A4 | 50. 0 | Polypropylene | 50. 0 | None | None | Kneader+Pelletizer | Black | 36. 7 |
| Comparative Example B5 | Comparative Example A5 | 50. 0 | Polypropylene | 50. 0 | None | None | Kneader+Pelletizer | Black | 36.9 |
| Comparative Example B6 | Iron powder | 5.0 | Polypropylene | 90. 0 | SiO₂ | 5.0 | Kneader+Pelletizer | Gray | 27.1 |

### <<3>> Production of molded body

### (Example C1)

Using a kneader and a T-die, the resin composition (pellets) produced in the Example B1 was melted and molded to obtain a sheet-like molded body having a thickness: 100 µm.

### (Examples C2, C3)

Sheet-like molded bodies were produced in the same manner as in the Example C1, except that the pellets produced in the Examples B2 and B3 were used as the resin composition instead of the pellets produced in the Example B1, respectively.

### (Example C4)

Using a kneader, the resin composition (pellets) produced in the Example B4 was melted and injection-molded into a mold to obtain a plate-shaped molded body having a thickness: 2 mm.

### (Example C5)

Using a kneader, the resin composition (pellets) produced in the Example B5 was melted and injection-molded into a mold to obtain a plate-shaped molded body having a thickness: 2 mm.

### (Examples C6 to C13)

Sheet-like molded bodies were produced in the same manner as in the Example C1, except that the pellets produced in the Examples B6 to B13 were used as the resin composition instead of the pellets produced in the Example B1, respectively.

### (Example C14)

The ferrite powder produced in the Example A1 and SiO₂ were dispersed in a PVA aqueous solution having a solid content of 10 mass%, and it was applied using an applicator and dried to obtain a sheet-like molded body having a thickness: 100 µm. At this time, the solid content of PVA, the ferrite powder and SiO₂ were adjusted so that each mass ratio became 75.0 mass%, 20.0 mass%, and 5.0 mass%, respectively.

### (Example C15)

The ferrite powder produced in the Example A4, a liquid epoxy resin, a polymerization initiator, a boron trifluoride monoethylamine complex as a curing agent and silica as a white pigment (AEROSIL 200 manufactured by NIPPON AEROSIL CO., LTD.) were mixed, and then this mixture was poured into a mold made of a silicone resin. Thereafter, it was heated at 120°C to cure the epoxy resin. Thus, a disk-shaped molded body having a diameter: 13 mm and a thickness: 2.0 mm was produced.

A content rate of the ferrite powder in the obtained molded body was 20.0 mass%, a content rate of the resin material was 75.0 mass%, and a content rate of the coloring agent was 5.0 mass%.

### (Example C16)

The ferrite powder produced in the Example A1, an olefine-based thermoplastic elastomer and titanium dioxide particles as a white pigment were mixed, and this mixture was poured into a mold made of a silicone resin. Thereafter, it was heated at 120°C to produce a disk-shaped molded body having a diameter: 13 mm and a thickness: 2.0 mm.

A content rate of the ferrite powder in the obtained molded body was 20.0 mass%, a content rate of the resin material was 75.0 mass%, and a content rate of the coloring agent was 5.0 mass%.

### (Examples C17, C18)

Disk-shaped molded bodies were produced in the same manner as in the Example C16, except that a kind of the resin material was changed as shown in Table 4.

### (Example C19)

The ferrite powder produced in the Example A1, a silicone resin and titanium dioxide particles as a white pigment were mixed so that a content rate of the ferrite powder was 20.0 mass%, a content rate of the resin material was 75.0 mass% and a content rate of the coloring agent (pigment) was 5.0 mass% in the molded body. This mixture was poured into a mold made of a silicone resin. At this time, the silicone resin was diluted with an organic solvent to a solid content of 20% by weight to use. It with the mold was heated at 65°C to evaporate the organic solvent, and then heated to 120°C. Thus, the silicone resin was cured to produce a disk-shaped molded body having a diameter: 13 mm and a thickness: 2.0 mm.

### (Example C20)

A disk-shaped molded body was produced in the same manner as in the Example C19, except that a kind of the resin material was changed as shown in Table 4.

### (Example C21)

The resin composition (powder form) produced in the Example B14 was put into a mold and pressurized, and then it was taken out from the mold. It was heated at 180°C for 4 hours to melt and cure. Thus, a disk-shaped molded body having a diameter: 13 mm and a thickness: 2.0 mm was produced.

### (Example C22)

The resin composition (powder form) produced in the Example B15 was put into a mold and pressurized, and then it was taken out from the mold. It was heated at 180°C for 4 hours to melt and cure. Thus, a disk-shaped molded body having a diameter: 13 mm and a thickness: 2.0 mm was produced.

### (Comparative Examples C1 to C6)

Sheet-like molded bodies were produced in the same manner as in the Example C1, except that the pellets produced in the Comparative Examples B1 to B6 were used as the resin composition instead of the pellets produced in the Example B1, respectively.

The conditions of the molded body of each of the Examples and the Comparative Examples described above are shown as a whole in Table 4.

### Table 4

**Table 4**

| | Kind of resin composition used for production | Constituent materials | | | | | | Molding method | Thickness [mm] | Tint |
|---|---|---|---|---|---|---|---|---|---|---|
| | | Ferrite | powder | Resin material | | Coloring agent | | | | |
| | | Kind | Content rate [mass%] | Kind | Content rate [mass%] | Kind | Content rate [mass %] | | | |
| Example C1 | Example B1 | Example A1 | 5.0 | Polypropylene | 95.0 | None | None | Kneader+T-die | 0.1 | Black |
| Example C2 | Example B2 | Example A1 | 20.0 | Polypropylene | 80.0 | None | None | Kneader+T-die | 0.1 | Black |
| Example C3 | Example B3 | Example A1 | 50.0 | Polypropylene | 50.0 | None | None | Kneader+T-die | 0.1 | Black |
| Example C4 | Example B4 | Example A1 | 85.0 | Polypropylene | 15.0 | None | None | Kneader+Spray to mold | 2.0 | Black |
| Example C5 | Example B5 | Example A1 | 90.0 | Polypropylene | 10.0 | None | None | Kneader+Spray to mold | 2.0 | Black |
| Example C6 | Example B6 | Example A1 | 2.0 | Polypropylene | 93.0 | SiO₂ | 5.0 | Kneader+T-die | 0.1 | Light gray |
| Example C7 | Example B7 | Example A1 | 10.0 | Polypropylene | 85.0 | SiO₂ | 5.0 | Kneader+T-die | 0.1 | Light gray |
| Example C8 | Example B8 | Example A1 | 20.0 | Polypropylene | 75.0 | SiO, | 5.0 | Kneader+T-die | 0.1 | Light gray |
| Example C9 | Example B9 | Example A2 | 20.0 | Polyethylene | 75.0 | SiO₂ | 5.0 | Kneader+T-die | 0.1 | Light gray |
| Example C10 | Example B10 | Example A1 | 20.0 | Polyvinyl chloride | 75,0 | SiO₂ | 5.0 | Kneader+T-die | 0.1 | Light gray |
| Example C11 | Example B11 | Example A3 | 20.0 | Polyvinylidene chloride | 75.0 | SiO₂ | 5.0 | Kneader+T-die | 0.1 | Light gray |
| Example C12 | Example B12 | Example A4 | 20.0 | Nylon | 75.0 | SiO₂ | 5.0 | Kneader+T-die | 0.1 | Light gray |
| Example C13 | Example B13 | Example A5 | 20.0 | Fluorine based resin | 75.0 | SiO₂ | 5.0 | Kneader+T-die | 0.1 | Light gray |
| Example C14 | - | Example A1 | 20.0 | Polyvinyl alcohol | 75.0 | SiO₂ | 5.0 | Applicator | 0.1 | Light gray |
| Example C15 | - | Example A4 | 20.0 | Epoxy resin | 75.0 | SiO₂ | 5.0 | Pouring into mold | 2.0 | Gray |
| Example C16 | - | Example A1 | 20.0 | Thermoplastic elastomer | 75.0 | TiO₂ | 5.0 | Pouring into mold | 2.0 | Gray |
| Example C17 | - | Example A1 | 20.0 | Silicone rubber | 75.0 | TiO₂ | 5.0 | Pouring into mold | 2.0 | Gray |
| Example C18 | - | Example A1 | 20,0 | Butadiene rubber | 75.0 | TiO₂ | 5.0 | Pouring into mold | 2.0 | Gray |
| Example C19 | - | Example A1 | 20.0 | Silicone resin | 75.0 | TiO₂ | 5.0 | Pouring into mold | 2.0 | Gray |
| Example C20 | - | Example A1 | 20.0 | Acrylic resin | 75.0 | TiO₂ | 5.0 | Pouring into mold | 2.0 | Gray |
| Example C21 | Example B14 | Example A4 | 20.0 | Nylon | 75.0 | SiO₂ | 5.0 | Pressure forming | 2.0 | Light gray |
| Example C22 | Example B15 | Example A4 | 20.0 | Fluorine based resin | 75.0 | SiO₂ | 5.0 | Pressure forming | 2.0 | Light gray |
| Comparative Example C1 | Comparative Example B1 | Comparative Example A1 | 5.0 | Polypropylene | 90.0 | SiO₂ | 5.0 | Kneader+T-die | 0.1 | Light gray |
| Comparative Example C2 | Comparat ive Example B2 | Comparative Example A2 | 5.0 | Polypropylene | 90.0 | SiO₂ | 5.0 | Kneader+T-die | 0.1 | Light gray |
| Comparative Example C3 | Comparative Example B3 | Comparative Example A3 | 5.0 | Polypropylene | 90.0 | SiO₂ | 5.0 | Kneader+T-die | 0.1 | Light gray |
| Comparative Example C4 | Comparative Example B4 | Comparative Example A4 | 50.0 | Polypropylene | 50.0 | None | None | Kneader+T-die | 0.1 | Black |
| Comparative Example C5 | Comparati ve Example B5 | Comparative Example A5 | 50.0 | Polypropylene | 50.0 | None | None | Kneader+T-die | 0.1 | Black |
| Comparaive Example C6 | Comparative Example B6 | Iron powder | 5.0 | Polypropylene | 90.0 | SiO₂ | 5.0 | Kneader+T-die | 0.1 | Gray |

### <<4>> Evaluation of Molded Body

### <<4-1>> Detection by metal detector

The molded body produced in each of the Examples and the Comparative Examples described above was allowed to pass through a belt conveyor type metal detector (META-HAWKII, manufactured by System Square Inc.) and sensitivity (level meter (F value, S value), iron ball sensitivity, SUS ball sensitivity) which was capable of detecting the molded body was determined.

### <<4-2>> Presence or absence of abnormal heating at the time of irradiating with microwaves

In order to confirm the presence or absence of the abnormal heating at the time of irradiating with the microwaves, the molded body produced in each of the Examples and the Comparative Examples described above was heated at 600 W for 5 minutes using a commercially available microwave oven. The state of each molded body at this time was evaluated according to the following criteria.

∘: Abnormal heating is hardly observed.
Δ: Temperature rise of the molded body was observed within an appropriate range.
X: Abnormal heating of the molded body was observed and burning of the molded body was confirmed. Or abnormality such as occurrence of spark in the microwave oven was observed and evaluation was stopped.

In each of the Examples C1 to C3 and C6 to C14 and each of the Comparative Examples C1 to C6 in which the molded body was molded into the sheet shape, the molded body was cut into a size of 80 mm × 60 mm, and then the cut molded body was evaluated. In each of the Examples C4, C5 and C15 to C22, the obtained molded body was used for the evaluation as it was.

These results are shown in Table 5.

### Table 5

**Table 5**

| | Level meter (F value) | Iron ball sensitivity | Level meter (S value) | SUS ball sensitivity | Heating test by microwave oven (heating at 600 W for 5 minutes) |
|---|---|---|---|---|---|
| Example C1 | 27 | Fe φ 0.8~1.0 considerable | 83 | SUS φ 0.8~1.0 considerable | ○ |
| Example C2 | 56 | Fe φ 1.0~1.2 considerable | 118 | SUS φ 1.0~1.2 considerable | ○ |
| Example C3 | 123 | Fe φ 1.5 considerable | 480 | SUS φ 1.2 considerable | o |
| Example C4 | 435 | Fe φ 2.5 considerable | 660 | SUS φ 1.2 considerable | △ (Slightly warm) |
| Example C5 | 523 | Fe φ 2.5 or more considerable | 821 | SUS φ 1.5 considerable | △ (Slightly warm) |
| Example C6 | 22 | Fe φ 1.0~1.2 considerable | 48 | SUS φ 0.6~0.8 considerable | ○ |
| Example C7 | 60 | Fe φ 1.0~1.2 considerable | 73 | SUS φ 0.8~1.0 considerable | ○ |
| Example C8 | 57 | Fe φ 1.0~1.2 considerable | 358 | SUS φ 1.0~1.2 considerable | ○ |
| Example C9 | 54 | Fe φ 1.0~1.2 considerable | 487 | SUS φ 1.0~1.2 considerable | ○ |
| Example C10 | 55 | Fe φ 1.0~1.2 considerable | 601 | SUS φ 1.0~1.2 considerable | ○ |
| Example C11 | 58 | Fe φ 1.0~1.2 considerable | 394 | SUS φ 1.0~1.2 considerable | ○ |
| Example C12 | 58 | Fe φ 1.0~1.2 considerable | 562 | SUS φ 1.0~1.2 considerable | ○ |
| Example C13 | 54 | Fe φ 1.0~1.2 considerable | 488 | SUS φ 1.0~1.2 considerable | ○ |
| Example C14 | 56 | Fe φ 1.0~1.2 considerable | 474 | SUS φ 1.0~1.2 considerable | ○ |
| Example C15 | 24 | Fe φ 0.8 considerable | 499 | SUS φ 1.0~1.2 considerable | ○ |
| Example C16 | 22 | Fe φ 0.8 considerable | 623 | SUS φ 1.0~1.2 considerable | ○ |
| Example C17 | 23 | Fe φ 0.8 considerable | 556 | SUS φ 1.0~1.2 considerable | ○ |
| Example C18 | 22 | Fe φ 0.8 considerable | 622 | SUS φ 1.0~1.2 considerable | ○ |
| Example C19 | 23 | Fe φ 0.8 considerable | 431 | SUS φ 1.0~1.2 considerable | ○ |
| Example C20 | 23 | Fe φ 0.8 considerable | 520 | SUS φ 1.0~1.2 considerable | ○ |
| Example C21 | 58 | Fe φ 1.0~1.2 considerable | 562 | SUS φ 1.0~1.2 considerable | ○ |
| Example C22 | 58 | Fe φ 1.0~1.2 considerable | 562 | SUS φ 1.0~1.2 considerable | ○ |
| Comparative Example C1 | <5 | Not detectable | 25 | SUS φ 0.5 considerable | ○ |
| Comparative Example C2 | <5 | Not detectable | 31 | SUS φ 0.5 considerable | ○ |
| Comparative Example C3 | 72 | Fe φ 1.2~1.4 considerable | 223 | SUS φ 0.8~1.0 considerable | × (Part of molded body too much heated and burned) |
| Comparative Example C4 | 135 | Fe φ 1.5 considerable | 1000 or more (unmeasurable) | SUS φ 1.5~2.0 considerable or more | ○ |
| Comparative Example C5 | 128 | Fe φ 1.5 considerable | 1000 or more (unmeasurable) | SUS φ 1.5~2.0 considerable or more | ○ |
| Comparative Example C6 | 320 | Fe φ 2.0~2.2 considerable | 1000 or more (unmeasurable) | SUS φ 1.5~2.0 considerable or more | × (Spark occurred during heating and evaluation was stopped.) |

As is apparent from Table 5, in the present invention, the molded body which can be stably detected by the metal detector could be obtained. Further, in the present invention, it was possible to preferably control the surface property of the molded body, and effectively prevent unintentional roughness from generating due to inclusion of the powder. Further, in the present invention, the molded body could be adjusted to various colors by the coloring agent. In contrast, satisfactory results were not obtained in the comparative examples.

### INDUSTRIAL APPLICABILITY

The ferrite powder of the present invention is ferrite powder detectable with a metal detector, comprising: hard ferrite particles containing Sr of 7.8 mass% or more and 9.0 mass% or less and Fe of 61.0 mass% or more and 65.0 mass% or less. Therefore, it is possible to provide the ferrite powder which can suitably use for producing the molded body which can be stably detected with the metal detector. Therefore, the ferrite powder of the present invention has industrial applicability.

## Claims

1. Ferrite powder detectable with a metal detector, comprising:
hard ferrite particles containing Sr of 7.8 mass% or more and 9.0 mass% or less and Fe of 61.0 mass% or more and 65.0 mass% or less,
wherein an amount of Na to be measured by ion chromatography is 1 ppm or more and 200 ppm or less.

2. The ferrite powder as claimed in claim 1, wherein a volume average particle diameter of the particles constituting the ferrite powder is 0.1 µm or more and 100 µm or less.

3. The ferrite powder as claimed in claim 1 or 2, wherein residual magnetization by a VSM measurement when a magnetic field of 10 K·1000/4πA/m is applied is 25 A·m²/kg or more and 40 A·m²/kg or less.

4. The ferrite powder as claimed in any one of claims 1 to 3, wherein coercive force by a VSM measurement when a magnetic field of 10 K·1000/4πA/m is applied is 39.7 kA/m or more and 320 kA/m or less.

5. The ferrite powder as claimed in any one of claims 1 to 4, wherein an amount of Cl to be measured by the ion chromatography is 1 ppm or more and 100 ppm or less.

6. The ferrite powder as claimed in any one of claims 1 to 5, wherein an amount of S to be measured by the ion chromatography is 1 ppm or more and 1000 ppm or less.

7. A resin composition, comprising:
the ferrite powder as claimed in any one of claims 1 to 6; and
a resin material.

8. The resin composition as claimed in claim 7, wherein the ferrite powder is dispersedly present in the resin material.

9. The resin composition as claimed in claim 7 or 8, wherein a content rate of the ferrite powder in the resin composition is 5.0 mass% or more and 90 mass% or less.

10. The resin composition as claimed in any one of claims 7 to 9, wherein the resin material includes one kind or more kinds selected from the group consisting of polyethylene, polypropylene, polyvinyl chloride, polyvinylidene chloride, polyvinyl alcohol (PVA), a fluorine based resin, silicone rubber, butadiene rubber, a thermoplastic elastomer, an epoxy resin and a silicone resin.

11. A molded body having a portion formed by using the resin composition as claimed in any one of claims 7 to 10.

12. The molded body as claimed in claim 11, wherein a content rate of the ferrite powder is 2.0 mass% or more and 20 mass% or less.

13. The molded body as claimed in claim 11 or 12, wherein the molded body contains the ferrite powder in a region within 1.0 mm in a thickness direction from a surface thereof.

14. Use of the molded body as claimed in one of the claims 11 to 13 in a field for manufacturing, processing and packaging of a food.

15. Use as claimed in claim 14, wherein the molded body is used for a part or all of a cooking utensil, a food preparation tool or a food packaging member.

## Patentansprüche

1. Mit einem Metalldetektor nachweisbares Ferritpulver, aufweisend:
Hartferritpartikel, enthaltend Sr mit 7,8 Massen-% oder mehr und 9,0 Massen-% oder weniger und Fe mit 61,0 Massen-% oder mehr und 65,0 Massen-% oder weniger,
wobei eine durch lonenchromatographie zu messende Menge an Na 1 ppm oder mehr und 200 ppm oder weniger beträgt.

2. Ferritpulver nach Anspruch 1, wobei ein volumengemittelter Teilchendurchmesser der das Ferritpulver bildenden Teilchen 0,1 µm oder mehr und 100 µm oder weniger beträgt.

3. Ferritpulver nach Anspruch 1 oder 2, wobei die Restmagnetisierung bei einer VSM-Messung, wenn ein Magnetfeld von 10 K · 1000/4πA/m angelegt wird, 25 A · m²/kg oder mehr und 40 A · m²/kg oder weniger beträgt.

4. Ferritpulver nach einem der Ansprüche 1 bis 3, wobei die Koerzitivkraft bei einer VSM-Messung, wenn ein Magnetfeld von 10 K ·1000/4-πA/m angelegt wird, 39,7 kA/m oder mehr und 320 kA/m oder weniger beträgt.

5. Ferritpulver nach einem der Ansprüche 1 bis 4, wobei die durch die lonenchromatographie zu messende Menge an Cl 1 ppm oder mehr und 100 ppm oder weniger beträgt.

6. Ferritpulver nach einem der Ansprüche 1 bis 5, wobei die durch die lonenchromatographie zu messende Menge an S 1 ppm oder mehr und 1000 ppm oder weniger beträgt.

7. Harzzusammensetzung, aufweisend:
das Ferritpulver nach einem der Ansprüche 1 bis 6; und
ein Harzmaterial.

8. Harzzusammensetzung nach Anspruch 7, wobei das Ferritpulver in dem Harzmaterial dispergiert vorliegt.

9. Harzzusammensetzung nach Anspruch 7 oder 8, wobei ein Anteil des Ferritpulvers in der Harzzusammensetzung 5,0 Massen-% oder mehr und 90 Massen-% oder weniger beträgt.

10. Harzzusammensetzung nach einem der Ansprüche 7 bis 9, wobei das Harzmaterial eine Art oder mehrere Arten umfasst, ausgewählt aus der Gruppe bestehend aus Polyethylen, Polypropylen, Polyvinylchlorid, Polyvinylidenchlorid, Polyvinylalkohol (PVA), einem Harz auf Fluorbasis, Silikonkautschuk, Butadienkautschuk, einem thermoplastischen Elastomer, einem Epoxidharz und einem Silikonharz.

11. Formkörper mit einem Teil, der unter Verwendung der Harzzusammensetzung nach einem der Ansprüche 7 bis 10 gebildet ist.

12. Formkörper nach Anspruch 11, wobei ein Anteil des Ferritpulvers 2,0 Masse-% oder mehr und 20 Masse-% oder weniger beträgt.

13. Formkörper nach Anspruch 11 oder 12, wobei der Formkörper das Ferritpulver in einem Bereich innerhalb von 1,0 mm in einer Dickenrichtung von einer Oberfläche desselben enthält.

14. Verwendung des Formkörpers nach einem der Ansprüche 11 bis 13 in einem Bereich zur Herstellung, Verarbeitung und Verpackung eines Lebensmittels.

15. Verwendung nach Anspruch 14, wobei der Formkörper für einen Teil oder die Gesamtheit eines Kochutensils, eines Lebensmittelzubereitungswerkzeugs oder eines Lebensmittelverpackungselements verwendet wird.

## Revendications

1. Poudre de ferrite détectable avec un détecteur de métaux, comprenant :
des particules de ferrite dure contenant 7,8 % en masse ou plus et 9,0 % en masse ou moins de Sr et 61,0 % en masse ou plus et 65,0 % en masse ou moins de Fe,
dans lequel une quantité de Na à mesurer par chromatographie ionique est de 1 ppm ou plus et de 200 ppm ou moins.

2. Poudre de ferrite selon la revendication 1, dans laquelle un diamètre de particule moyen en volume des particules constituant la poudre de ferrite est de 0,1 µm ou plus et de 100 µm ou moins.

3. Poudre de ferrite selon la revendication 1 ou 2,
dans lequel l'aimantation résiduelle par une mesure VSM lorsqu'un champ magnétique de 10 K·1000/4nA/m est appliqué est de 25 A·m²/kg ou plus et de 40 A·m²/kg ou moins.

4. Poudre de ferrite selon l'une quelconque des revendications 1 à 3, dans laquelle la force coercitive par une mesure VSM lorsqu'un champ magnétique de 10 K·1000/4πA/m est appliqué est de 39,7 kA/m ou plus et de 320 kA/m ou moins.

5. Poudre de ferrite selon l'une quelconque des revendications 1 à 4, dans laquelle une quantité de Cl à mesurer par la chromatographie ionique est de 1 ppm ou plus et de 100 ppm ou moins.

6. Poudre de ferrite selon l'une quelconque des revendications 1 à 5, dans laquelle une quantité de S à mesurer par la chromatographie ionique est de 1 ppm ou plus et de 1000 ppm ou moins.

7. Composition de résine comprenant :
la poudre de ferrite selon l'une quelconque des revendications 1 à 6 ; et
un matériau de résine.

8. Composition de résine selon la revendication 7, dans laquelle la poudre de ferrite est présente de manière dispersée dans le matériau de résine.

9. Composition de résine selon la revendication 7 ou 8, dans laquelle un taux de teneur de la poudre de ferrite dans la composition de résine est de 5,0 % en masse ou plus et de 90 % en masse ou moins.

10. Composition de résine selon l'une quelconque des revendications 7 à 9, dans laquelle le matériau de résine comprend un type ou plusieurs types sélectionné(s) parmi le groupe constitué du polyéthylène, du polypropylène, du polychlorure de vinyle, du polychlorure de vinylidène, de l'alcool polyvinylique (PVA), d'une résine à base de fluor, du caoutchouc silicone, du caoutchouc butadiène, d'un élastomère thermoplastique, d'une résine époxy et d'une résine silicone.

11. Corps moulé ayant une partie formée en utilisant la composition de résine selon l'une quelconque des revendications 7 à 10.

12. Corps moulé selon la revendication 11, dans lequel un taux de teneur de la poudre de ferrite est de 2,0 % en masse ou plus et de 20 % en masse ou moins.

13. Corps moulé selon la revendication 11 ou 12, dans lequel le corps moulé contient la poudre de ferrite dans une région comprise dans moins de 1,0 mm dans une direction d'épaisseur à partir d'une surface de celui-ci.

14. Utilisation du corps moulé selon l'une des revendications 11 à 13 dans un domaine de fabrication, de transformation et de conditionnement d'un aliment.

15. Utilisation selon la revendication 14, dans laquelle le corps moulé est utilisé pour tout ou partie d'un ustensile de cuisine, d'un outil de préparation alimentaire ou d'un élément de conditionnement alimentaire.
